(19) Europäisches Patentamt
European Patent Office
Office européen des brevets

(11) EP 4 347 511 B1

(12) EUROPEAN PATENT SPECIFICATION

(45) Date of publication and mention of the grant of the patent:
**20.08.2025 Bulletin 2025/34**

(21) Application number: **23708572.5**

(22) Date of filing: **24.01.2023**

(51) International Patent Classification (IPC):
***C08F 220/06*** *(2006.01)* ***C02F 5/12*** *(2023.01)*
***C02F 5/10*** *(2023.01)* ***C08F 8/32*** *(2006.01)*
*C02F 103/02* *(2006.01)*

(52) Cooperative Patent Classification (CPC):
(C-Sets available)
**C08F 220/06; C02F 5/105; C02F 5/125; C08F 8/32;**
C02F 2103/023; C02F 2303/22 (Cont.)

(86) International application number:
**PCT/IN2023/050077**

(87) International publication number:
**WO 2023/170704 (14.09.2023 Gazette 2023/37)**

(54) **A NOVEL POLYMER, AN ANTISCALING FORMULATION, PREPARATION AND USE THEREOF FOR INHIBITING SCALE FORMATION**

EIN NEUES POLYMER, EINE ANTIKALK-FORMULIERUNG, DEREN HERSTELLUNG UND VERWENDUNG ZUR HEMMUNG DER KESSELSTEINBILDUNG

UN NOUVEAU POLYMÈRE, UNE FORMULATION ANTITARTRE, SA PRÉPARATION ET SON UTILISATION POUR INHIBER LA FORMATION DE TARTRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.03.2022 IN 202241013106**

(43) Date of publication of application:
**10.04.2024 Bulletin 2024/15**

(73) Proprietor: **Hindustan Petroleum Corporation Limited**
**Bengaluru 560067 (IN)**

(72) Inventors:
- **DONI, Eswararao**
**Bengaluru 560067 (IN)**
- **CHINTHALAPATI, Siva Kesava Raju**
**Bengaluru 560067 (IN)**
- **DASARY, Hareesha**
**Bengaluru 560067 (IN)**
- **SINGH, Eklovepreet**
**Bengaluru 560067 (IN)**
- **BALASUBRAMANIAM, Ravi**
**Bengaluru 560067 (IN)**

(74) Representative: **Reddie & Grose LLP**
**The White Chapel Building**
**10 Whitechapel High Street**
**London E1 8QS (GB)**

(56) References cited:
**US-A- 4 018 702 US-A1- 2016 096 908**

- **CAN HATICE KAPLAN ET AL: "Water-soluble anhydride containing alternating copolymers as scale inhibitors", DESALINATION., vol. 355, 11 November 2014 (2014-11-11), NL, pages 225 - 232, XP093044813, ISSN: 0011-9164, DOI: 10.1016/j.desal.2014.11.001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 347 511 B1

(52) Cooperative Patent Classification (CPC): (Cont.)

C-Sets
**C08F 8/32, C08F 220/06;**
**C08F 8/32, C08F 222/06;**
**C08F 220/06, C08F 222/06**

## Description

## FIELD OF THE INVENTION:

The present invention relates to a cleaning or an antiscaling formulation for inhibiting the scale formation in industrial water system. Specifically, the present invention provides a novel polymer, an antiscaling formulation prepared from the said novel polymer, and use of the said antiscaling formulation to inhibit the scale formation in industrial water system.

## BACKGROUND OF THE INVENTION:

Scales are termed as the crystalline solids which develops from the precipitation of mineral or inorganic ions present in water. Scale deposition is the direct consequence of the thermodynamic conditions of the system where the solubility of dissolved inorganic salts exceeded above their saturation level due to the evaporation of water, leading to precipitation or crystallization and consequently scale formation.

Further, the scale deposition in the petroleum industry and industrial circulating water has become one of the key issues hampering efficiency. The effected instruments or units include heat exchangers, condensers, evaporators, cooling towers, boilers, and pipe walls. Most of the scales attached to the equipment surface are made of $CaCO_3$, while a certain amount of $CaSO_4$, $Ca_3(PO_4)_2$, $Fe_2O_3$ and silica are also present. These scale deposits are formed via complex crystallization process.

In the industry, several techniques have been followed for inhibiting the scale formation and usage of chemical additives is one of the most effective routes to prevent the scale formation. The chemical additives alter the crystal growth mechanisms and thereby reduce the scale formation on the surfaces. In addition, these additives act as dispersing agents or stabilizing agents. The chemical additives are added in very small quantities, typically in ppm dosage.

Further, the scale formation can also be prevented by inactivating cations with chelating or sequestering agents such as ethylenediaminetetraacetic acid (EDTA) and thereby solubility of their reaction products is not exceeded. However, chelation is a stoichiometric reaction and requires higher equivalents of chelating agent per cation, which is not always desirable or economically feasible.

Further, the most efficient and economic method of scale prevention include the use of scale inhibitors such as organic phosphonic acids, organic phosphonates, and polymers. The use of phosphorus-containing scale inhibitors has been gradually reduced due to eutrophication and could also cause environmental pollution. Further, multi-functionalized polymers are widely tested in the industry as scale inhibitors due to their higher efficiency and stability.

US5,087,376 discloses multifunctional scale inhibitor compositions, alone or together with polymeric structures, which are characterized by having, in addition to a phosphononethylamino group, a sulfonic acid and/or carboxylic acid group. By incorporating several types of functional groups into a single molecule, control of scale formation and deposition under more severe conditions than normally encountered can be attained.

JP2011212591A discloses a descaling method and a descaling agent usable during boiler operation, requiring no complicated facility nor control, and causing no corrosion. Aldonic acid (salt) such as gluconic acid (salt) and glucoheptonic acid (salt), and a chelating agent such as EDTA (ethylene diamine tetraacetic acid) are added to a water system while operating the water system. Whenever required a carbonic acid-based polymer is added besides these compounds.

JPH0663590A discloses to effectively remove scale in a cooling water system without stopping arm operation by preparing the scale remover from a copolymer of a vinyl monomer having a carboxylic group or its salt and a vinyl monomer having a sulfonic group or its salt. In the scale remover to wash and remove the scale stuck on a heat transferring surface on a boiler or in the cooling water system, etc., the scale remover consists of the copolymer of the vinyl monomer having a carboxylic group or its salt and the vinyl monomer having a sulfonic group or its salt, and the copolymer in which the mol ratio of the carboxylic group and the sulfonic group is in the range of (30:70):(95:5) and the weight-average molecular weight (expressed in terms of polystyrene) is in the range of 1000-100000, is used. The scale remover prepared from such a copolymer is added such that the content of an isoprene sulfonic acid copolymer is >=0.01 wt.% for holding water quantity, thus the scale is stripped or dissolved and subsequently it is discharged outside the system by blowing.

Xinyu Guo et al, RSC Advances, 2020, 10, 33595, title "the synthesis of polyaspartic acid derivative PASP-Im and investigation of its scale inhibition performance and mechanism in industrial circulating water" discloses PASP-Im, a polyaspartic acid derivative, as a scale inhibitor for industrial circulating water, and which is synthesized by a simple and green synthesis method. It is disclosed that the synthesized PASP-Im exhibits better antiscale performance against the deposit of $CaCO_3$ scales than the unmodified PASP. Further, the document also discloses that the synthesized PASP-Im can change the crystallization path of calcium carbonate from stable calcite to vaterite, which is dispersible in water, and thus leading to changes in the morphology of $CaCO_3$ scales. Further, the document also discloses that on the one hand, the synthesized PASP-Im can significantly change the shape of the calcium carbonate scales and block their crystallization path in the early stage, thereby retarding the formation of calcite. On the other hand, the O and N atoms in the negatively charged functional groups of synthesized PASP-Im, including -NH2 and - COOH, can interact with $Ca^{2+}$ ions to block the active growth points of $CaCO_3$ crystals and retard the formation of $CaCO_3$ scales.

A.L. Kavitha et al, published 2010, Elsevier, title "evaluation of synthesized antiscalants for cooling water system application" discloses synthesis and use of polyacrylic acid to inhibit the scale formation in cooling water systems. Mineral scales are formed in cooling water systems, and they cause heat transfer problems. Accordingly, the polyacrylic acid was synthesized, characterized and the ability of the polymer to mitigate the calcium carbonate and calcium sulphate scale formation was tested through chemical screening and electrochemical impedance techniques. X-ray diffraction (XRD) and scanning electron microscope (SEM) studies were performed to understand the morphological changes of the scales in the presence of the polymer. The gelation and iron dispersion ability of the polymer were also noted. The synthesized polyacrylic acid was compared with polyacrylamide and it was observed that the polyacrylic acid could be used for the cooling water applications. Among the two inhibitors, polyacrylic acid shows slightly better antiscaling properties even at higher temperatures and pH for both CaCO3 and CaSO4 scales compared to the commercial product. US 2016/096908 A1 discloses an antiscaling formulation comprising a copolymer of acrylic acid and AMPS on which a morpholine compound has been grafted. It also discloses a homopolymer of maleic anhydride and a terpolymer of maleic anhydride, vinyl acetate and ethyl acrylate on both of which a morpholine compound has been grafted.

Accordingly, there is continuous demand for better antiscalants and improved antiscaling formulations which show good efficiency at higher temperatures as well. Further, there is a continuous demand for polymer based antiscaling formulations which inhibit the scale formation in industrial water system with greater efficiency. Further, there is continuous demand for better antiscalants which are economical and easy to produce.

**SUMMARY OF THE PRESENT INVENTION:**

The present invention provides a polymer of structural formula 1, an antiscaling formulation prepared from the said polymer, and use of the said antiscaling formulation to inhibit the scale formation in industrial water system.

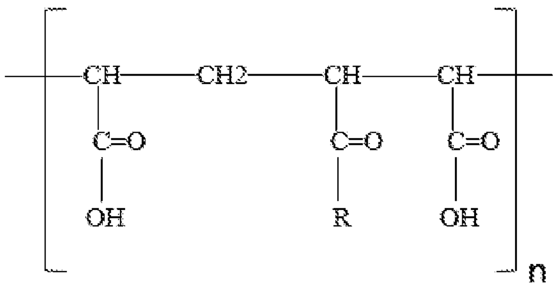

Formula-1

wherein,

R = substituted ethyleneamine, substituted morpholine, substituted alkanolamine.

The substituted ethyleneamine is aminoethylpiperazine, and the substituted alkanolamine is ethanolamine.

Further, the present invention provides an antiscaling formulation comprising the said polymer of structural formula 1, a dealkalizer, a chelating agent, and a biocide. Specifically, the novel polymer is 5-100ppm, the dealkalizer is 5-200ppm, the chelating agent is 5-100ppm, and the biocide is 2-20ppm.

The dealkalizer is selected from an inorganic acid, an organic acid or a combination thereof. Wherein, the inorganic acid is selected from sulphamic acid, phosphoric acid, boric acid and the organic acid is selected from citric acid, oxalic acid, malic acid, malonic acid. The chelating agent is selected from EDTA tetrasodium salt (EDTA - Na4), Glycine, Diethylenetriaminepentaacetic acid (DTPA), Citric acid.

The biocide is selected from an oxidizing biocide, a non-oxidizing biocide, or a combination thereof. Wherein, the oxidizing biocide is selected from Sodium hypochlorite, Hydrogen peroxide, Sodium bromide solution, and the non-oxidizing biocide is selected from Benzalkonium chloride, cetylpyridinium chloride, didecyldimethylammonium chloride, tetraethylammonium bromide.

Further, the present invention provides a process for preparing an antiscaling formulation for inhibiting the scale formation in industrial water system. The process comprises steps of preparing the polymer of structural formula 1, wherein, the said polymer incorporates more coordinating sites along with three-dimensional orientation thereof. Wherein, the polymer of structural formula 1 is prepared by reacting a copolymer of maleic anhydride and acrylic acid commonly known as MA-AA copolymer (wherein, MA is Maleic anhydride and AA is acrylic acid) with one of compound selected from ethyleneamines, morpholine, or alkanolamines at a reaction temperature of 50°-80°C for 1-3 hours. Wherein, the

ethyleneamine is selected from aminoethylpiperazine, and the substituted alkanolamine is selected from ethanolamine.

Thereafter, the said polymer of structural formula 1 is mixed with at least one of a dealkalizer, a chelating agent, and a biocide to provide the said antiscaling formulation.

The present invention also provides a method for inhibiting the scale formation in an industrial water system, wherein, the method comprises adding the said antiscaling formulation within the industrial water system.

**OBJECTIVES OF THE PRESENT INVENTION:**

It is the primary objective of the present invention to provide a novel polymer, wherein, the said polymer acts as an antiscalant.

It is further objective of the present invention to provide a process for synthesis of the said novel polymer.

It is further objective of the present invention to provide an antiscaling formulation including the said novel polymer, and wherein, the said antiscaling formulation inhibit the scale formation in industrial water systems.

It is further objective of the present invention to provide a process for preparing the said antiscaling formulation.

It is further objective of the present invention to provide an antiscaling formulation which exhibits excellent antiscaling properties even at higher temperature.

**DESCRIPTION OF THE INVENTION:**

According to the main embodiment, the present invention provides a novel polymer of structural formula 1, an antiscaling formulation prepared from the said novel polymer, and use of the said antiscaling formulation to inhibit the scale formation in industrial water system.

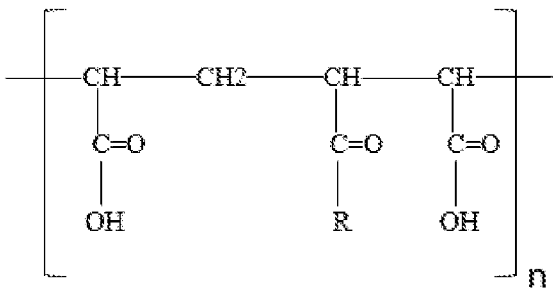

Formula-1

wherein,

R = substituted ethyleneamine, substituted morpholine, substituted alkanolamine.

The substituted ethyleneamine is aminoethylpiperazine and the substituted alkanolamine is selected from ethanolamine.

Wherein, the said polymer is prepared by reacting an MA-AA copolymer with one of compound selected from ethyleneamines, morpholine, or alkanolamines at a reaction temperature of 50°-80°C for 1-3 hours.

The MA-AA copolymer is represented hereinbelow with general structure.

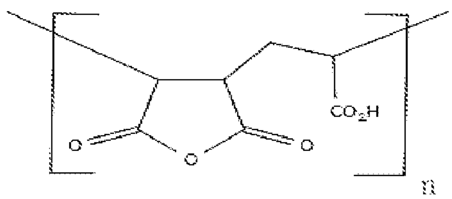

The ethyleneamines and morpholine are represented hereinbelow with general structure.

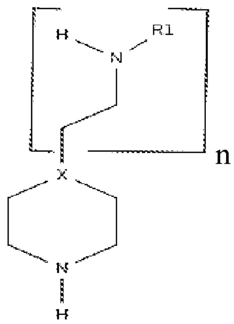

n = 0, 1
R1 = H, alkyl, aryl, aryl alkyl, hydroxy alkyl
X = O, N

The alkanolamines are represented hereinbelow with general structure.

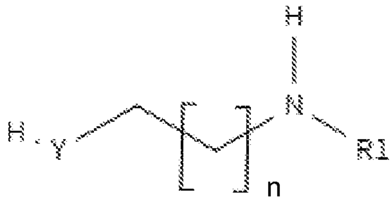

n = 1-5
R1 = H, alkyl, aryl, hydroxyalkyl
Y = O, NH 7

The polymer of formula-1 incorporates more coordinating sites along with three-dimensional orientation thereof. Further, the said polymer helps in changing the crystallization path of the scale precursor and disperse them in water. In one hand, polymer can alter the shape of scales and block their crystallization path in the early stage, thereby retarding the formation of scale deposits. On the other hand, the O and N atoms in the polymer can interact with scale precursor metal ions such as $Ca^{2+}$, $Mg^{2+}$, $Fe^{2+}$, $Fe^{3+}$ ions to block the active growth of crystals and retard the formation of scales.

Specifically, the present invention provides an antiscaling formulation comprising the said polymer of structural formula 1, a dealkalizer, a chelating agent, and a biocide.

Specifically, the novel polymer is 5-100ppm, the dealkalizer is 5-200ppm, the chelating agent is 5-100ppm, and the biocide is 2-20ppm.

The dealkalizer is selected from an inorganic acid, an organic acid or a combination thereof. Wherein, the inorganic acid is selected from sulphamic acid, phosphoric acid, or boric acid, and the organic acid is selected from citric acid, oxalic acid, malic acid, or malonic acid.

The chelating agent is selected from EDTA tetrasodium salt (EDTA - Na4), Glycine, Diethylenetriaminepentaacetic acid (DTPA), or Citric acid.

The biocide is selected from an oxidizing biocide, a non-oxidizing biocide, or a combination thereof. Wherein, the oxidizing biocide is selected from Sodium hypochlorite, Hydrogen peroxide, or Sodium bromide solution, and the non-oxidizing biocide is selected from Benzalkonium chloride, cetylpyridinium chloride, didecyldimethylammonium chloride, or tetraethylammonium bromide.

Further, the present invention provides a process for preparing an antiscaling formulation for inhibiting the scale formation in industrial water system. The process includes steps of preparing the polymer of structural formula 1, wherein, the said polymer incorporates more coordinating sites along with three-dimensional orientation thereof. Then mixing the said polymer with at least one of a dealkalizer, a chelating agent, and a biocide to get the said antiscaling formulation.

In an embodiment, the novel polymer is 5-100ppm, the dealkalizer is 5-200ppm, the chelating agent is 5-100ppm, and the biocide is 2-20ppm.

In another embodiment, the novel polymer is 5-10ppm, the dealkalizer is 5-20ppm, the chelating agent is 5-10ppm, and the biocide is 2-8ppm. In another embodiment, the dealkalizer is selected from an inorganic acid, an organic acid, or a combination thereof, the chelating agent is a sodium salt of EDTA, and the biocide is an oxidizing biocide, a non-oxidizing biocide, or a combination thereof. In another embodiment, inorganic acid is sulphamic acid, the organic acid is citric acid, the chelating agent is EDTA tetrasodium salt (EDTA - Na4), the oxidizing biocide is Sodium hypochlorite, and the

non-oxidizing biocide is selected from Benzalkonium chloride. In a preferred embodiment, the antiscaling formulation for inhibiting the scale formation includes the said novel polymer in 5ppm, sulphamic acid in 5ppm, citric acid in 5ppm, EDTA tetrasodium salt (EDTA - Na4) in 5ppm, Sodium hypochlorite in 2ppm and Benzalkonium chloride in 2ppm.

In another embodiment, the novel polymer is 10-30ppm, the dealkalizer is 20-60ppm, the chelating agent is 10-30ppm, and the biocide is 2-10ppm. In another embodiment, the dealkalizer is selected from an inorganic acid, an organic acid, or a combination thereof, the chelating agent is a sodium salt of EDTA, and the biocide is an oxidizing biocide, a non-oxidizing biocide, or a combination thereof. In another embodiment, inorganic acid is sulphamic acid, the organic acid is citric acid, the chelating agent is EDTA tetrasodium salt (EDTA - Na4), the oxidizing biocide is Sodium hypochlorite, and the non-oxidizing biocide is selected from Benzalkonium chloride. In a preferred embodiment, the antiscaling formulation for inhibiting the scale formation includes the said novel polymer in 20ppm, sulphamic acid in 20ppm, citric acid in 20ppm, EDTA tetrasodium salt (EDTA - Na4) in 20ppm, Sodium hypochlorite in 2ppm and Benzalkonium chloride in 2ppm.

In another embodiment, the novel polymer is 30-100ppm, the dealkalizer is 60-200ppm, the chelating agent is 30-100ppm, and the biocide is 10-20ppm. In another embodiment, the dealkalizer is selected from an inorganic acid, an organic acid, or a combination thereof, the chelating agent is a sodium salt of EDTA, and the biocide is an oxidizing biocide, a non-oxidizing biocide, or a combination thereof. In another embodiment, inorganic acid is sulphamic acid, the organic acid is citric acid, the chelating agent is EDTA tetrasodium salt (EDTA - Na4), the oxidizing biocide is Sodium hypochlorite, and the non-oxidizing biocide is selected from Benzalkonium chloride. In a preferred embodiment, the antiscaling formulation for inhibiting the scale formation includes the said novel polymer in 100ppm, sulphamic acid in 100ppm, citric acid in 100ppm, EDTA tetrasodium salt (EDTA - Na4) in 100ppm, Sodium hypochlorite in 10ppm and Benzalkonium chloride in 10ppm.

**Development of polymer-based scale inhibitor formulations:**

Recently, multi-functionalized polymers have gained a lot of attention due to their inherent features and scale inhibition efficiency. In view of this, novel multifunctional polymers have been designed and synthesized to test as scale inhibitors.

**Design and synthesis of Novel Polymers:**

Novel Polymers are designed to incorporate more coordinating sites along with possibility of three-dimensional orientation. The presence of more coordinating sites will increase the chelation with scalant metal precursors (metal ions), and three-dimensional orientation leads to crystal growth distortion.

**Synthesis of Polymer-1:** Potassium persulfate (0.012 mol) was added to two-neck flask and dissolved in 50 mL deionized water at 70 °C. To this flask, mixture of MA (0.306 mol) and AA (0.336 mol) in 100 ml deionized water was added slowly. Later, the reaction mixture was further stirred at 80 °C for 2 hours to obtained copolymer MA-AA.

To the above MA-AA copolymer solution, 2-aminoethylpiperazine (AEP) (0.306 mol) was added slowly and stirred at 80 °C for 2 hours. The obtained polymer (MA-AA-AEP) is characterized using GPC, Fourier transform infrared spectroscopy (FT-IR).

**Synthesis of Polymer-2:**

Potassium persulfate (0.012 mol) was added to two-neck flask and dissolved in 50 mL deionized water at 70 °C. To this flask, mixture of MA (0.306 mol) and AA (0.336 mol) in 100 ml deionized water was added slowly. Later, the reaction mixture was further stirred at 80 °C for 2 hours to obtained copolymer MA-AA.

To the above MA-AA copolymer solution, morpholine (M) (0.306 mol) was added slowly and stirred at 80 °C for 2 hours. The obtained polymer (MA-AA-M) is characterized using GPC, Fourier transform infrared spectroscopy (FT-IR).

**Synthesis of Polymer-3:**

Potassium persulfate (0.012 mol) was added to two-neck flask and dissolved in 50 mL deionized water at 70 °C. To this flask, mixture of MA (0.306 mol) and AA (0.336 mol) in 100 ml deionized water was added slowly. Later, the reaction mixture was further stirred at 80 °C for 2 hours to obtained copolymer MA-AA.

To the above MA-AA copolymer solution, monoethanolamine (MEA) (0.306 mol) was added slowly and stirred at 80 °C for 2 hours. The obtained polymer (MA-AA-MEA) is characterized using GPC, Fourier transform infrared spectroscopy (FT-IR).

In an important embodiment, the present invention provides an antiscaling formulation having the said polymer of structural formula 1, a dealkalizer, a chelating agent, and a biocide. Specifically, the polymer is 5-100ppm, the dealkalizer is

5-200ppm, the chelating agent is 5-100ppm, and the biocide is 2-20ppm.

The dealkalizer is selected from an inorganic acid, an organic acid or a combination thereof. Wherein, the inorganic acid is selected from sulphamic acid, phosphoric acid, boric acid and the organic acid is selected from citric acid, oxalic acid, malic acid, malonic acid.

The chelating agent is selected from EDTA tetrasodium salt (EDTA - Na4), Glycine, Diethylenetriaminepentaacetic acid (DTPA), Citric acid.

The biocide is selected from an oxidizing biocide, a non-oxidizing biocide, or a combination thereof. Wherein, the oxidizing biocide is selected from Sodium hypochlorite, Hydrogen peroxide, Sodium bromide solution, and the non-oxidizing biocide is selected from Benzalkonium chloride, cetylpyridinium chloride, didecyldimethylammonium chloride, tetraethylammonium bromide

**Development of Antiscaling formulation(s):**

After successful synthesis of above polymers, evaluation tests have been carried out using different dosages of these polymers under various reaction conditions of temperature and time. Industrial water systems also suffer issues of increase of pH of water, eutrophication, algae growth etc. To provide comprehensive water treatment solution i.e., complete antisclant package for industrial cooling water systems, various formulations were developed mainly consisting of antiscalant (polymer), dealkalizer (sulphamic acid & citric acid), chelating agent (EDTA.Na4), biocide-1 (oxidizing, NaOCl), biocide-2 (non-oxidizing, Benzalkonium chloride).

**Performance evaluation of scale inhibitor:**

Scale inhibition efficiency of scale inhibitors can be carried out by using two methods, i.e., first method is Static Bottle measurement, and the second method is Dynamic measurement. The static bottle scale inhibition method is widely used technique as it is cost-effective, quick, and easy to operate. Thus, the different antiscaling formulations as developed has been evaluated following Static Bottle scale inhibition method.

**Static Bottle measurement:**

The aim of this test is to evaluate the scale tendency and determine the effectiveness of scale inhibitors by visual observations of the turbidity/precipitation of the scale followed by analysis of filtrate/supernatants. Scale precursor ions (cationic and anionic) are mixed at defined proportions in the presence and absence of scale inhibitor. The resultant reaction mixtures were then placed in constant temperature bath for definite time intervals. The filtrate/supernatants are analyzed, and the inhibitor's effectiveness is determined by its ability to retain scaling ions in the solution.

Moreover, the inhibition efficiency of the antiscalant formulation(s) as developed was also investigated with respect to time, temperature, and dosage.

**$CaCO_3$ scale inhibition studies:**

Calcium carbonate or calcite is one of the most common mineral scales observed. Carbonate scale formation depends on the equilibrium between bicarbonate, carbonate, and carbon dioxide relative to the change in temperature and pressure. It forms precipitates with a strong bonding force on the equipment surface and thus causing blockage of pipelines or decreasing the heat transfer.

**Standard reaction conditions for $CaCO_3$ scale inhibition:** Scale inhibition test solution was prepared by adding 200 mg of $NaHCO_3$ and 130 mg of $CaCl_2.2H_2O$ in 500 mL of deionized water. The initial concentration of $Ca^{2+}$ in the test solution was measured by ICP-OES. To this test solution, a defined amount of scale inhibitor formulation was added and heated in a constant water bath at 50°C for 6 hours. At the end of the experiment, reaction mixture was cooled to room temperature and filtered. The concentration of $Ca^{2+}$ in the filtrate was measured by ICP-OES. Similarly, the control experiment was conducted without scale inhibitor and concentration of $Ca^{2+}$ was measured at the end of the experiment.

The scale inhibition efficiency is calculated by the following equation:

$$\text{Scale inhibition efficiency (\%)} = [(X_2\text{-}X_1) / (X_0\text{-}X_1)] \times 100$$

Wherein,

$$X_2 = \text{Conc. of } Ca^{2+} \text{ in the filtrate at the end of experiment with scale inhibitor}$$

$X_1$ = Conc. of $Ca^{2+}$ in the filtrate at the end of experiment without scale inhibitor

$X_0$ = Conc. of $Ca^{2+}$ in the test solution at the start of the experiment

**Evaluation of various Antiscaling formulations for $CaCO_3$ scale inhibition**

Various antiscaling formulations were prepared with varying quantities (ppm) of inorganic acid (sulphamic acid), organic acid (citric acid), copolymer MA-AA, Polymer-1 (MA-AA-AEP), Polymer-2 (MA-AA-M), Polymer-3 (MA-AA-MEA), chelating agent (EDTA-Na4), biocide-1 (sodium hypochlorite), biocide-2 (benzalkonium chloride) as shown in Table-1. These formulations were tested under different reaction conditions of temperature and time as shown in examples-1 to Example-14 in Table-1 through Static Bottle measurement method.

Table-1: Evaluation of various antiscaling formulations for $CaCO_3$ scale inhibition

| Components (in ppm) | Examples | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Inorganic acid | 10 | -- | -- | -- | -- | -- | -- | -- | 10 | -- | 10 | -- | 5 | 5 |
| Organic acid | 10 | -- | -- | -- | -- | -- | -- | -- | 10 | 5 | 10 | -- | 5 | 5 |
| Copolymer MA-AA | -- | 3 | 10 | -- | -- | -- | -- | -- | -- | -- | -- | -- | -- | -- |
| Polymer-1 | -- | -- | -- | 3 | 5 | 10 | -- | -- | -- | 5 | -- | 10 | 5 | 5 |
| Polymer-2 | -- | -- | -- | -- | -- | -- | 10 | -- | -- | -- | -- | -- | -- | -- |
| Polymer-3 | -- | -- | -- | -- | -- | -- | | 10 | -- | -- | -- | -- | -- | -- |
| Chelating agent | -- | -- | -- | -- | -- | -- | -- | -- | 10 | -- | -- | -- | 5 | 5 |
| Biocide-1 | -- | -- | -- | -- | -- | -- | -- | -- | -- | -- | -- | -- | 2 | 2 |
| Biocide-2 | -- | -- | -- | -- | -- | -- | -- | -- | -- | -- | -- | -- | 2 | 2 |
| Temp (°C) | 50 | 50 | 50 | 50 | 50 | 50 | 50 | 50 | 50 | 50 | 70 | 70 | 50 | 70 |
| Time (h) | 6 | 6 | 6 | 6 | 6 | 6 | 6 | 6 | 6 | 6 | 6 | 6 | 6 | 6 |
| Inhibition efficiency (%) | 67 | 71 | 80 | 77 | 90 | 96 | 83 | 85 | 83 | 92 | 41 | 95 | 98 | 95 |

From the experimental results shown in Table-1, it was found that novel polymer-1 (MA-AA-AEP) (example-6) has shown excellent performance as antiscalant compared to acid components (example-1), copolymer MA-AA (example-3), Polymer-2 (MA-AA-M) (example-7) and Polymer-3 (MA-AA-MEA) (example-8). The higher performance of polymer-1 (MA-AA-AEP) compared to other formulations under identical reaction conditions is attributed to (i) presence of more coordinating sites that increase the chelation with scalant metal precursors (metal ions), and (ii) three-dimensional orientation leading to crystal growth distortion. It was also found that polymer-2 (example-7) and polymer-3 (example-8) has shown slightly better performance compared to co polymer MA-AA, under identical reaction conditions.

Generally, an increase of temperature (e.g., from 50°C to 70°C) increases the scale formation tendency and leads to poor performance of the scale inhibitors at higher temperatures. The same trend was found in case of organic and inorganic acid-based antiscaling formulations and showed less performance at 70°C (Example 11) compared to reaction at 50°C (Example-1).

However, novel polymer-1 (MA-AA-AEP) has shown consistent performance even at higher temperature (Example 6 & Example 12). To provide comprehensive solution i.e., complete antisclant package for industrial cooling water systems, various formulations consisting of antiscalant, dealkalizer, chelating agent and oxidizing biocide and non-oxidizing biocide have been developed. As shown in Example-13, the complete antiscalant package showed excellent performance (98% efficiency) under standard reaction conditions (Temperature: 50 °C and Time: 6 hour) for $CaCO_3$ scale inhibition. Moreover, the same formulation at higher temperature (at 70 °C) also showed consistent performance (Example-14, 95% efficiency) unlike acid-derived formulation (Example-11).

**$CaSO_4$ scale inhibition studies:**

Calcium sulphate scale is viewed as a stable scale in the field of water treatment because it has a low solubility

(independent of pH) and difficulty in removal by acid cleaning procedures unlike $CaCO_3$ scale removal. Thus, calcium sulphate scale must always be prevented in earlier stages. In calcium sulphate scale formation, calcium sulphate dihydrate (gypsum, $CaSO_4 \cdot 2H_2O$) is highly stable and commonly precipitates in industrial water systems.

**Standard reaction conditions for $CaSO_4$ scale inhibition:** Scale inhibition test solution was prepared by adding 4 g of $Na_2SO_4$ and 4 g of $CaCl_2.2H_2O$ in 500 mL of deionized water. $CaSO_4$ scale inhibition testing was performed similar to that of $CaCO_3$ scale inhibition. The initial concentration of $Ca^{2+}$ in the test solution was measured by ICP-OES. To this test solution, defined amount of scale inhibitor formulation was added and heated in a constant temperature bath for 6 hrs. At the end of the experiment, reaction mixture was cooled to room temperature and filtered. The concentration of $Ca^{2+}$ in the filtrate was measured by ICP-OES. Similarly, the control experiment was conducted without scale inhibitor and concentration of $Ca^{2+}$ measured at the end of the experiment.

The scale inhibition efficiency is calculated by the following equation:

$$\text{Scale inhibition efficiency (\%)} = [(X_2 - X_1) / (X_0 - X_1)] \times 100$$

Wherein,

$$X_2 = \text{Conc. of } Ca^{2+} \text{ in the filtrate at the end of experiment with scale inhibitor}$$

$$X_1 = \text{Conc. of } Ca^{2+} \text{ in the filtrate at the end of experiment without scale inhibitor}$$

$$X_0 = \text{Conc. of } Ca^{2+} \text{ in the test solution at the start of the experiment}$$

**Evaluation of various antiscaling formulations for $CaSO_4$ scale inhibition:** Various antiscaling formulations were prepared and tested in Static Bottle measurement method under standard reaction conditions for $CaSO_4$ scale inhibition as shown in below Table-2.

Table-2: Evaluation of various antiscaling formulations for $CaSO_4$ scale inhibition

| **Components (in ppm)** | **Examples** | | | | | | | | | |
|---|---|---|---|---|---|---|---|---|---|---|
| | **1** | **2** | **3** | **4** | **5** | **6** | **7** | **8** | **9** | **10** |
| Inorganic acid | 20 | -- | -- | -- | -- | -- | 20 | -- | 20 | 20 |
| Organic acid | 20 | -- | -- | -- | -- | -- | 20 | -- | 20 | 20 |
| Co Polymer (MA-AA) | -- | 10 | 20 | -- | -- | -- | -- | -- | -- | -- |
| Polymer-1 | -- | -- | -- | 10 | 20 | -- | -- | 20 | 20 | 20 |
| Polymer-3 | -- | -- | -- | -- | -- | 20 | -- | -- | -- | -- |
| Chelating agent | -- | -- | -- | -- | -- | -- | 20 | -- | 20 | 20 |
| Biocide-1 | -- | -- | -- | -- | -- | -- | -- | -- | 2 | 2 |
| Biocide-2 | -- | -- | -- | -- | -- | -- | -- | -- | 2 | 2 |
| Temp (°C) | 50 | 50 | 50 | 50 | 50 | 50 | 50 | 70 | 50 | 70 |
| Time (h) | 6 | 6 | 6 | 6 | 6 | 6 | 6 | 6 | 6 | 6 |
| Inhibition efficiency (%) | 11 | 15 | 61 | 35 | 92 | 46 | 32 | 88 | 98 | 95 |

From the experimental results reported in Table-2, it was found that novel polymer-1 (MA-AA-AEP) (example-5) has shown excellent performance as an antiscalant against CaSO4 scaling, compared to acid components (example-1), copolymer MA-AA (example-3), Polymer-3 (MA-AA-MEA) (example-6). It was also found that polymer-1 (MA-AA-AEP) at 10 ppm dosage has shown very less efficiency (35%) (example-4) compared to 20 ppm dosage (92% efficiency) (example-5). This might be due to requirement of threshold amounts of antiscalant to show considerable performance.

Similar trend was observed with copolymer MA-AA (examples 2 & 3). Combination of acidic components and chelating agent (example-7) has also shown poor performance compared to polymer-1 (MA-AA-AEP) (example-5). The higher performance of polymer-1 (MA-AA-AEP) compared to other formulations under identical reaction conditions is

attributed to (i) presence of more coordinating sites that increase the chelation with scalant metal precursors (metal ions), and (ii) three-dimensional orientation leading to crystal growth distortion. Generally, an increase of temperature (e.g., from 50°C to 70°C) increases the scale formation tendency and leads to poor performance of the scale inhibitors at higher temperatures.

However, novel polymer-1 (MA-AA-AEP) has shown consistent performance even at higher temperature (Example 5 & Example 8). To provide comprehensive solution i.e., complete antisclant package for industrial cooling water systems, various formulations consisting of antiscalant, dealkalizer, chelating agent and oxidizing biocide and non-oxidizing biocide have been developed. As shown in Example 9, the comprehensive formulation has showed excellent performance (98% efficiency) under standard reaction conditions (Temperature: 50 °C and Time: 6 h) for $CaSO_4$ scale inhibition. Moreover, the same formulation at higher temperature (at 70 °C) also showed consistent performance (Example-10, 95% efficiency).

**Sea water scale inhibition:**

Seawater has been used for long time as a cooling fluid in heat exchangers to reduce fresh water usage in industrial cooling water systems. Sea water is a complex aqueous solution with large tendency for scale formation when used in industrial cooling water systems. By weight, $Cl^-$, $Na^+$, $SO_4^{2-}$ , $Mg^{2+}$, $K^+$ and $Ca^{2+}$ are the most abundant ions in the seawater which account for 99% of total dissolved ions in seawater. To further evaluate the efficiency of the presently developed scale inhibitors against sea water, test solutions (1-3) were prepared mimicking "sea water" by adding above mentioned ions.

Test Solution-1: Prepared by adding 15 g of NaCl to a solution of 200 mg of $NaHCO_3$ and 130 mg of $CaCl_2.2H_2O$ in 500 mL of deionized water

Test Solution-2: Prepared by adding 15 g of NaCl to a solution of 4 g of $Na_2SO_4$ and 4 g of $CaCl_2.2H_2O$ in 500 mL of deionized water

Test Solution-3: Prepared by adding (i) 125 mg of $CaCl_2$ and 200 mg of $NaHCO_3$ (for $CaCO_3$), (ii) 125 mg of $CaCl_2$ and 125 mg of $Na_2SO_4$ (for $CaSO_4$), (iii) 500 mg of $MgCl_2$ and 500 mg of $Na_2SO_4$ (for $MgSO_4$) and (iv) 15 g of NaCl in 500 mL of deionized water.

**Standard reaction conditions for sea water scale inhibition:** Test solutions 1-3 were treated with antiscalant formulations in Static Bottle measurement method under standard reaction conditions of temperature (70 °C) and time (6 hr) and results were given in Table-3.

Table-3: Evaluation of various antiscaling formulations for sea water-like samples

| **Components** (in ppm) | **Test Solution-1** | | | **Test Solution-2** | **Test Solution-3** |
|---|---|---|---|---|---|
| | **Example 1** | **Example 2** | **Example 3** | **Example 4** | **Example 5** |
| Inorganic acid | -- | -- | 100 | 100 | 100 |
| Organic acid | -- | -- | 100 | 100 | 100 |
| Polymer-1 | 20 | 100 | 100 | 100 | 100 |
| Chelating agent | -- | -- | 100 | 100 | 100 |
| Biocide-1 | -- | -- | 10 | 10 | 10 |
| Biocide-2 | -- | -- | 10 | 10 | 10 |
| Temp (°C) | 70 | 70 | 70 | 70 | 70 |
| Time (h) | 6 | 6 | 6 | 6 | 6 |
| Inhibition efficiency (%) | 63 | 91 | 97 | 83 | 81 |

From the experimental results reported in Table-3, it can be concluded that the presently developed antiscalant formulations provides excellent performance against seawater-like test samples even at higher temperatures (70°C). As the concentration of the ions increased in the test solutions (above 30,000 ppm), it required higher dosages (eg. 100 ppm) of antiscalant formulations to have better performance (example-1 and example-2).

To provide comprehensive solution for industrial cooling water systems, a comprehensive formulation consisting

of antiscalant, dealkalizer, chelating agent and oxidizing biocide and non-oxidizing biocide was developed and tested against the test solutions 1-3. The comprehensive formulation has showed good performance as antiscalant for seawater type test solutions under standard reaction conditions of temperature (70 °C) and time (6 h).

From the above experimental studies and results reported in Tables 1-3, it can be clearly seen that presently developed comprehensive antiscalant formulation consisting of antiscalant, dealkalizer, chelating agent and oxidizing biocide and non-oxidizing biocide was showing excellent performance as antiscalant formulation. However, the dosage of individual components was determined by the type of scale formation and concentration of ions present in the water or test solution.

**Corrosion inhibition tests:** Corrosion of equipment is another associated problem resulting from the presence of various corrosion causing species in water. Sea water is well known for corrosion of the equipments. Thus, antiscaling formulation should have inherent corrosion inhibitor features as an integral part of such formulations. Corrosion inhibition efficiency studies were done by following weight loss method.

**Weight loss method:** Corrosion studies were conducted following ASTM D2688-15E1 (weight loss method) and efficiency was measured by weight loss measurement of rotating hung carbon steel slices. Test solution was taken into a beaker and antiscalant formulation of known concentration was added. The beaker was placed in a constant temperature bath at 45 °C. Carbon steel coupon was polished, washed, dried, and weighed and then immersed into the beaker solutions and rotated at 70 rpm for 48 h. At the end of the experiment, the carbon steel coupon was taken out, polished, washed, dried, and weighed again to record the weight loss during the experiment. Control experiment (without antiscalant formulation) was also conducted simultaneously under the same reaction conditions and recorded the weight loss during the experiment.

The corrosion inhibition efficiency was calculated by the following equation:

$$\text{Corrosion inhibition efficiency (\%)} = [(\Delta m_0 - \Delta m_1) / (\Delta m_0)] \times 100$$

Where $\Delta m_0$ and $\Delta m_1$ are the weight loss values of carbon steel coupons in the absence and presence of inhibitor, respectively.

Test solution-4 for corrosion inhibition studies was prepared by adding (i) 375 mg of $CaCl_2$ and 600 mg of $NaHCO_3$ (for $CaCO_3$), (ii) 375 mg of $CaCl_2$ and 375 mg of $Na_2SO_4$ (for $CaSO_4$), (iii) 1500 mg of $MgCl_2$ and 1500 mg of $Na_2SO_4$ (for $MgSO_4$) and (iv) 15 g of NaCl in 500 mL of deionized water. To this test solution, antiscalant formulation (Polymer-1, 100 ppm) was added and conducted testing at 45°C for 48 h. Control experiment was conducted simultaneously under the same reaction conditions. Corrosion experiment with antiscalant formulation has shown lesser weight loss compared to control experiment and inhibition efficiency was found to be 18% for antiscalant formulation.

**Biocidal activity of antiscalant formulation:**

Biocidal activity of the antiscalant formulation on microorganism growth was studied by zone of inhibition test. With this method, approximately one million cells from a single strain are spread over an agar plate using a sterile swab, then incubated in the presence of the antiscalant formulation for 24 hour. If the strain is susceptible to the antiscalant formulation, then a zone of inhibition appears on the agar plate and diameter of the zone represents the biocidal activity. If strain is resistant to the formulation, then no zone will be evident.

Biocidal activity experiments were carried out using the antiscalant formulation against *Escherichia coli* and showed complete zone of inhibition. Under the same conditions, control experiment (without antiscalant) does not show any inhibition zone. This confirms the biocidal activity of the developed antiscalant formulation.

Accordingly, it can be concluded that scale formation and deposition on the process equipment in industrial cooling water systems is one of the major issues hampering the performance. $CaCO_3$ and $CaSO_4$ are two commonly found scales in cooling water systems. To offer a solution to this issue, novel polymers were designed and synthesized. These polymers were featured with more coordinating sites to have better the chelation with scalant metal precursors (metal ions) and three-dimensional orientation to afford crystal growth distortion. These polymers were tested in ppm quantity against $CaCO_3$ and $CaSO_4$ scale formation and showed excellent scale inhibition efficiency. To provide a comprehensive solution to the scale formation, novel antiscaling formulations comprising of antiscalant (polymer), dealkalizer (sulphamic acid & citric acid), chelating agent (EDTA.Na4), biocide-1 (oxidizing, NaOCl), biocide-2 (non-oxidizing, Benzalkonium chloride) were prepared. These formulations were evaluated against $CaCO_3$, $CaSO_4$, sea water-like scale forming test solutions and showed excellent scale inhibition efficiency. These formulations were further featured with corrosion inhibition and biocidal activity. In conclusion, the present disclosure provides a comprehensive solution for inhibiting the scale formation, corrosion, as well as inhibiting the biocidal activity in the industrial water system.

## Claims

1. A novel polymer of the structural formula 1:

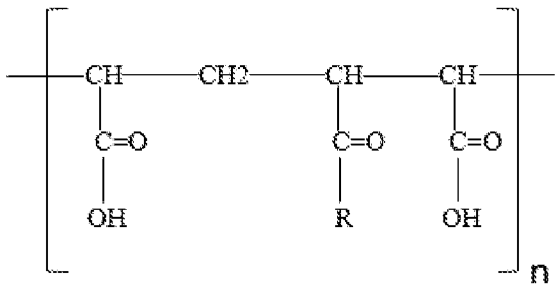

Formula 1

wherein,
R = substituted ethyleneamine, substituted morpholine, substituted alkanolamine.

2. The novel polymer as claimed in claim 1, wherein, the substituted ethyleneamine is aminoethylpiperazine.

3. The novel polymer as claimed in claim 1, wherein, the substituted alkanolamine is ethanolamine.

4. A process for preparing the novel polymer as claimed in claims 1-3, wherein a maleic anhydride-acrylic acid copolymer (MA-AA copolymer) is reacted with one of compounds selected from ethyleneamines, morpholine, and alkanolamines at a reaction temperature of 50-80°C for 1-3 hours.

5. An antiscaling formulation comprising the novel polymer as claimed in claims 1-3 or as obtained from the process as claimed in claim 4, a dealkalizer, a chelating agent, and a biocide.

6. The antiscaling formulation as claimed in claim 5, wherein, the novel polymer is 5-100ppm, the dealkalizer is 5-200ppm, the chelating agent is 5-100ppm, and the biocide is 2-20ppm.

7. The antiscaling formulation as claimed in claims 5-6, wherein, the dealkalizer is selected from an inorganic acid, an organic acid, or a combination thereof.

8. The antiscaling formulation as claimed in claim 5-6, wherein, the inorganic acid is selected from sulphamic acid, phosphoric acid, or boric acid.

9. The antiscaling formulation as claimed in claim 5-6, wherein, the organic acid is selected from citric acid, oxalic acid, malic acid, or malonic acid.

10. The antiscaling formulation as claimed in claim 5-6, wherein, the chelating agent is selected from ethylenediaminetetraacetic acid (EDTA) tetrasodium salt (EDTA - Na4), Glycine, Diethylenetriaminepentaacetic acid (DTPA), or Citric acid.

11. The antiscaling formulation as claimed in claim 5-6, wherein, the biocide is selected from an oxidizing biocide, a non-oxidizing biocide, or a combination thereof.

12. The antiscaling formulation as claimed in claim 11, wherein, the oxidizing biocide is selected from Sodium hypochlorite, Hydrogen peroxide, or Sodium bromide solution.

13. The antiscaling formulation as claimed in claim 11, wherein, the non-oxidizing biocide is selected from Benzalkonium chloride, cetylpyridinium chloride, didecyldimethylammonium chloride, or tetraethylammonium bromide.

14. A process for preparing an antiscaling formulation for inhibiting the scale formation in an industrial water system, wherein, the process comprises steps of:

preparing the novel polymer of structural formula 1 as claimed in claims 1-3 by reacting a maleic anhydride-acrylic acid copolymer (MA-AA copolymer) with one of compounds selected from an ethyleneamines, morpholine, and alkanolamines at a reaction temperature of 50-80°C for 1-3 hours; and
mixing the said novel polymer with at least one of a dealkalizer, a chelating agent, and a biocide.

**15.** A method for inhibiting the scale formation in an industrial water system, wherein, the method comprises adding the antiscaling formulation as claimed in claim 5-13 or as obtained from the process as claimed in claim 14 within the industrial water system.

**Patentansprüche**

**1.** Neues Polymer der Strukturformel 1:

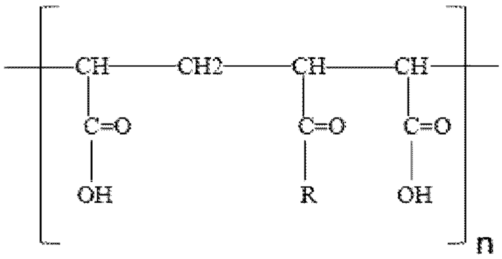

Formel 1

wobei
R = substituiertes Ethylenamin, substituiertes Morpholin, substituiertes Alkanolamin.

**2.** Neues Polymer nach Anspruch 1, wobei das substituierte Ethylenamin Aminoethylpiperazin ist.

**3.** Neues Polymer nach Anspruch 1, wobei das substituierte Alkanolamin Ethanolamin ist.

**4.** Verfahren zur Herstellung des neuen Polymers nach den Ansprüchen 1-3, wobei ein Maleinsäureanhydrid-AcrylsäureCopolymer (MA-AA-Copolymer) mit einer Verbindung ausgewählt aus Ethylenaminen, Morpholinen und Alkanolaminen bei einer Reaktionstemperatur von 50-80 °C für 1-3 Stunden umgesetzt wird.

**5.** Antiscaling-Formulierung, die das neue Polymer nach den Ansprüchen 1-3 oder wie mit dem Verfahren nach Anspruch 4 erhalten, ein Entalkalisierungsmittel, einen Chelatbildner und ein Biozid umfasst.

**6.** Antiscaling-Formulierung nach Anspruch 5, wobei das neue Polymer 5-100 ppm, der Entalkalisierer 5-200 ppm, der Chelatbildner 5-100 ppm und das Biozid 2-20 ppm beträgt.

**7.** Antiscaling-Formulierung nach den Ansprüchen 5-6, wobei der Entalkalisierer aus einer anorganischen Säure, einer organischen Säure und einer Kombination davon ausgewählt ist.

**8.** Antiscaling-Formulierung nach den Ansprüchen 5-6, wobei die anorganische Säure aus Sulfaminsäure, Phosphorsäure und Borsäure ausgewählt ist.

**9.** Antiscaling-Formulierung nach Anspruch 5-6, wobei die organische Säure aus Zitronensäure, Oxalsäure, Apfelsäure und Malonsäure ausgewählt ist.

**10.** Antiscaling-Formulierung nach Anspruch 5-6, wobei der Chelatbildner aus Ethylendiamintetraessigsäure (EDTA), Tetranatriumsalz (EDTA-Na4), Glycin, Diethylentriaminpentaessigsäure (DTPA) und Zitronensäure ausgewählt ist.

**11.** Antiscaling-Formulierung nach Anspruch 5-6, wobei das Biozid aus einem oxidierenden Biozid, einem nicht oxidierenden Biozid und einer Kombination davon ausgewählt ist.

**12.** Antiscaling-Formulierung nach Anspruch 11, wobei das oxidierende Biozid aus Natriumhypochlorit, Wasserstoffperoxid und Natriumbromidlösung ausgewählt ist.

**13.** Antiscaling-Formulierung nach Anspruch 11, wobei das nicht oxidierende Biozid aus Benzalkoniumchlorid, Cetylpyridiniumchlorid, Didecyldimethylammoniumchlorid und Tetraethylammonium ausgewählt ist.

**14.** Verfahren zur Herstellung einer Antiscaling-Formulierung zur Hemmung der Bildung von Ablagerungen in einem industriellen Wassersystem, wobei das Verfahren die folgenden Schritte beinhaltet:

Herstellen des neuen Polymers von Strukturformel 1 nach den Ansprüchen 1-3 durch Umsetzen eines Maleinsäureanhydrid-Acrylsäure-Copolymers (MA-AA-Copolymer) mit einer Verbindung, ausgewählt aus Ethylenaminen, Morpholin und Alkanolaminen, bei einer Reaktionstemperatur von 50 bis 80 °C für 1-3 Stunden; und
Mischen des genannten neuen Polymers mit mindestens einem Entalkalisierer, einem Chelatbildner und einem Biozid.

**15.** Verfahren zum Hemmen der Bildung von Ablagerungen in einem industriellen Wassersystem, wobei das Verfahren das Hinzufügen der Antiscaling-Formulierung nach Anspruch 5-13 oder mit dem Verfahren nach Anspruch 14 innerhalb des industriellen Wassersystems beinhaltet.

## Revendications

**1.** Nouveau polymère de la formule développée 1 :

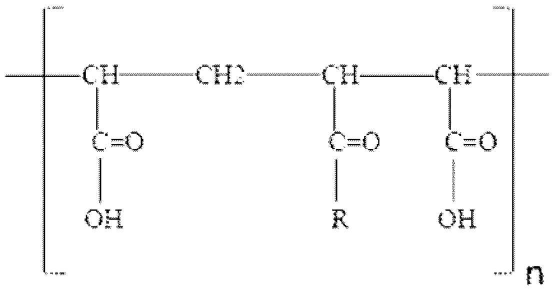

Formule 1

dans laquelle,
R = éthylèneamine substituée, morpholine substituée, alcanolamine substituée.

**2.** Nouveau polymère selon la revendication 1, dans lequel, l'éthylèneamine substituée est de l'aminoéthylpipérazine.

**3.** Nouveau polymère selon la revendication 1, dans lequel l'alcanolamine substituée est de l'éthanolamine.

**4.** Procédé de préparation du nouveau polymère selon les revendications 1-3, dans lequel un copolymère d'anhydride maléique-acide acrylique (copolymère MA-AA) est mis à réagir avec l'un des composés sélectionnés parmi des éthylèneamines, morpholine et alcanolamines à une température de réaction de 50-80 °C pendant 1-3 heures.

**5.** Formulation antitartre comprenant le nouveau polymère selon les revendications 1-3 ou tel qu'obtenu par le procédé selon la revendication 4, un désalcalinisateur, un agent chélateur et un biocide.

**6.** Formulation antitartre selon la revendication 5, dans laquelle le nouveau polymère fait 5-100 ppm, le désalcalinisateur fait 5-200 ppm, l'agent chélateur fait 5-100 ppm et le biocide fait 2-20 ppm.

**7.** Formulation antitartre selon les revendications 5-6, dans laquelle le désalcalinisateur est sélectionné parmi un acide inorganique, un acide organique ou une combinaison des mêmes.

**8.** Formulation antitartre selon les revendications 5-6, dans laquelle l'acide inorganique est sélectionné parmi l'acide sulfamique, l'acide phosphorique ou l'acide borique.

9. Formulation antitartre selon les revendications 5-6, dans laquelle l'acide organique est sélectionné parmi l'acide citrique, l'acide oxalique, l'acide malique ou l'acide malonique.

10. Formulation antitartre selon les revendications 5-6, dans laquelle l'agent chélateur est sélectionné parmi le sel tétrasodique d'acide éthylènediaminetétraacétique (EDTA) (Na4 - EDTA), la glycine, l'acide diéthylènetriaminepentaacétique (DTPA) ou l'acide citrique.

11. Formulation antitartre selon les revendications 5-6, dans laquelle le biocide est sélectionné parmi un biocide oxydant, un biocide non oxydant ou une combinaison des mêmes.

12. Formulation antitartre selon la revendication 11, dans laquelle le biocide oxydant est sélectionné parmi l'hypochlorite de sodium, le peroxyde d'hydrogène ou une solution de bromure de sodium.

13. Formulation antitartre selon la revendication 11, dans laquelle le biocide non oxydant est sélectionné parmi le chlorure de benzalkonium, le chlorure de cétylpyridinium, le chlorure de didécyldiméthylammonium ou le bromure de tétraéthylammonium.

14. Procédé de préparation d'une formulation antitartre pour inhiber la formation de tartre dans un système d'eau industriel, où le procédé comprend les étapes consistant à :

    préparer le nouveau polymère de la formule développée 1 selon les revendications 1-3 en mettant à réagir un copolymère d'anhydride maléique-acide acrylique (copolymère MA-AA) avec l'un des composés sélectionnés parmi des éthylèneamines, morpholine et alcanolamines à une température de réaction de 50-80 °C pendant 1-3 heures ; et
    mélanger ledit nouveau polymère avec au moins l'un d'entre un désalcalinisateur, un agent chélateur et un biocide.

15. Procédé d'inhibition de la formation de tartre dans un système d'eau industriel, où le procédé comprend ajouter la formulation antitartre selon les revendications 5-13 ou telle qu'obtenue par le procédé selon la revendication 14 dans le système d'eau industriel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5087376 A
- JP 2011212591 A
- JP H0663590 A
- US 2016096908 A1


### Non-patent literature cited in the description


- **XINYU GUO et al.** the synthesis of polyaspartic acid derivative PASP-Im and investigation of its scale inhibition performance and mechanism in industrial circulating water. *RSC Advances*, 2020, vol. 10, 33595
- **A.L. KAVITHA et al.** evaluation of synthesized antiscalants for cooling water system application. Elsevier, 2010